# EUROPÄISCHE PATENTSCHRIFT

(11) **EP 2 748 546 B1**
(45) Veröffentlichungstag und Bekanntmachung des Hinweises auf die Patenterteilung: **04.11.2015**
(21) Anmeldenummer: 12742810.0
(22) Anmeldetag: 02.08.2012
(51) Int. Cl.: F25J 3/04, B01D 3/32, B01D 1/00, F25J 1/00

(54) **VERFAHREN UND VORRICHTUNG ZUR TIEFTEMPERATUR-ZERLEGUNG EINES FLUIDGEMISCHS**
METHOD AND APPARATUS FOR THE LOW-TEMPERATURE FRACTIONATION OF A FLUID MIXTURE
PROCÉDÉ ET DISPOSITIF DE SÉPARATION CRYOGÉNIQUE D'UN MÉLANGE DE FLUIDES

(30) Priorität: 25.08.2011 DE 102011111630; 06.12.2011 EP 11009613
(43) Veröffentlichungstag der Anmeldung: 02.07.2014
(73) Patentinhaber: Linde Aktiengesellschaft, 80331 München (DE)
(72) Erfinder: Rüdiger, Horst, 86163 Augsburg (DE); Eckl, Robert, 80339 München (DE); Windmeier, Christoph, 82538 Geretsried (DE); Beimler, Alexander, 81369 München (DE); Yu, Yonggui, 85354 Freising (DE)
(74) Vertreter: Imhof, Dietmar
(86) Internationale Anmeldenummer: PCT/EP2012/003298
(87) Internationale Veröffentlichungsnummer: WO 2013/026525

(56) Entgegenhaltungen:
- JP-A- 5 296 654
- JP-A- 2002 115 965
- US-A- 4 617 037
- US-B1- 6 351 970
- SHAH G C: "Troubleshooting reboiler systems", CHEMICAL ENGINEERING PROGRESS, AMERICAN INSTITUTE OF CHEMICAL ENGINEERS, NEW YORK, NY, US, Bd. 75, Nr. 7, 1. Juli 1979 (1979-07-01), Seiten 53-58, XP009146152, ISSN: 0360-7275

## Beschreibung

Die Erfindung betrifft ein Verfahren zur Tieftemperatur-Zerlegung eines Fluidgemischs gemäß dem Oberbegriff des Patentanspruchs 1.

Unter "Tieftemperatur-Zerlegung" wird hier ein Verfahren verstanden, bei dem die Trennsäule bei einer Temperatur betrieben wird, die unterhalb der Umgebungstemperatur liegt und weniger als 200 K, vorzugsweise weniger als'190 K, höchst vorzugsweise weniger als 145 K beträgt.

Das Fluidgemisch wird in gasförmigem, flüssigem oder zweiphasigem Zustand in die Trennsäule eingeleitet, entweder am Kopf, am Sumpf oder an einer Zwischenstelle und in der Trennsäule durch Gegenstrom-Stoffaustausch einer aufsteigenden Dampfphase mit einer nach unten rieselnden Flüssigphase getrennt (Destillation bzw. Rektifikation). Die am unteren Ende (im Sumpf) der Trennsäule ankommende Flüssigkeitsphase wird als Sumpfflüssigkeit bezeichnet. Sie wird in einem Sumpfverdampfer durch Zufuhr von Wärme mindestens teilweise verdampft. Mindestens ein Teil des dabei erzeugten Dampfs bildet die in der Trennsäule aufsteigende Dampfphase. Der Sumpfverdampfer kann grundsätzlich innerhalb der Trennsäule oder in einem separaten Behälter außerhalb der Trennsäule angeordnet sein.

Das Kopfprodukt wird zum Beispiel gasförmig am Kopf der Trennsäule abgezogen; alternativ kann es flüssig aus einem Kopfkondensator entnommen werden. Das Sumpfprodukt wird beispielsweise flüssig aus dem Sumpfverdampfer entnommen; alternativ kann ein Teil des Dampfs, der im Sumpfverdampfer erzeugt wird, als Sumpfprodukt abgeführt werden.

Die Erfindung ist insbesondere auf die Zerlegung von Bestandteilen der atmosphärischen Luft anwendbar, insbesondere für die Gewinnung von Krypton oder Xenon oder eines krypton- und xenonangereicherten Gemischs aus einem gegenüber der Luft an Krypton und Xenon angereicherten Fluidgemisch.

Bei Verfahren der eingangs genannten Art wird die Wärme dem Sumpfverdampfer entweder durch indirekten Wärmeaustausch mit einem Heizmedium, insbesondere einem flüssigen oder gasförmigen Wärmeträger, oder mittels einer elektrischen Widerstandsheizung (Elektroerhitzer) zugeführt. Solche Verfahren und deren Einsatz bei der Gewinnung von Krypton oder Xenon oder eines krypton- und xenonangereicherten Gemischs aus einem gegenüber der Luft an Krypton und Xenon angereicherten Fluidgemisch sind aus JP 2002115965 A, US 6351970 B1 und JP 05296654 A bekannt.

Im ersten Fall ist ein relativ aufwändiger Wärmetauscher mit entsprechender Verrohrung notwendig und ein geeignetes Heizmedium muss zur Verfügung stehen.

Bei Nutzung elektrischer Energie zur Beheizung eines Säulensumpfs im kryogenen Bereich muss insbesondere die Zuverlässigkeit und gegebenenfalls die Austauschbarkeit des Erhitzers, aber auch die Dichtheit des Heizbehälters gewährleistet werden. Daher müssen im wärmeisolierten Tieftemperaturbereich aufwändige Maßnahmen zur Gewährleistung der Zugänglichkeit getroffen werden. Die Erzeugung von Widerstandswärme geht inhärent mit der Erhitzung des Heizleiters ein. Daher muss auch die Regelung und Kontrolle der Heizleitertemperatur vorgesehen werden.

Der Erfindung liegt die Aufgabe zugrunde, ein Verfahren der eingangs genannten Art so zu gestalten, dass der Sumpfverdampfer apparativ und/oder regelungstechnisch relativ einfach und zuverlässig gestaltet werden kann.

Diese Aufgabe wird dadurch gelöst, dass der Sumpfverdampfer durch induktive Erwärmung betrieben wird.

Die für die Verdampfung der Sumpfflüssigkeit erforderliche Wärme wird also mittels elektromagnetischer Induktion in den Sumpfverdampfer eingebracht.

Hierdurch muss der Behälter des Sumpfverdampfers weder für die Einbringung eines Heizmediums noch für die Einführung eines elektrischen Leiters durchbrochen werden. Ein Problem wegen mangelnder Dichtheit von Verbindungen entfällt. Die Energie wird ohne direkten mechanischen Kontakt übertragen.

Bei einer Widerstandserwärmung werden ein großer Widerstand, ein kleiner Querschnitt und somit höhere Temperaturen des Stromleiters angestrebt. Bei einer induktiven Erwärmung wird dagegen ein kleiner Widerstand und somit niedrigere Temperaturen des primären Stromleiters angestrebt. Die Gefahr eines Ausfalls der Spule einer induktiven Heizung ist deutlich geringer als bei einer Widerstandsheizung. Daher muss kein einfacher Zugang zur Heizung gewährleistet werden.

Die Temperaturkontrolle des Heizkörpers aus einem magnetischen Werkstoff ist nicht nötig, da beim Erreichen der Curie-Temperatur die magnetischen Eigenschaften des Werkstoffes verschwinden. Bei dieser Temperatur (für reines Ni etwa 360°C) wird die magnetische Energie nicht mehr im Heizkörper absorbiert. Daher ist die durch Induktion maximal erreichbare Temperatur der Heizfläche näherungsweise gleich mit der (werkstoffspezifischen) Curie-Temperatur des Heizkörpers. Die Leistungsregelung erfolgt über Spannung, Strom und/oder Frequenz der elektrischen Erregerenergie.

Die folgenden näheren Ausgestaltungen der Erfindung betreffen sowohl einen Sumpfverdampfer, der in einem separaten Behälter außerhalb der Trennsäule angeordnet ist, als auch die alternative Ausführungsform mit innerhalb der Trennsäule angeordnetem Sumpfverdampfer (Anordnung "innerhalb" bezieht sich hier auf die Wärme abgebenden Flächen des Sumpfverdampfers); im letzteren Fall ist der Behälter des Sumpfverdampfers gleich der Außenwand der Trennsäule in deren Sumpfbereich.

In einer ersten Ausführungsvariante der Erfindung ist der Wandbereich aus einem magnetischen, insbesondere einem ferro-, para- oder diamagnetischen Werkstoff gefertigt wie zum Beispiel einem austenitischen Stahl, Aluminium oder Kupfer, oder auch aus einer Legierung, die eines oder mehrere dieser Elemente enthält. Der Wandbereich des Behälters des Sumpfverdampfers wird unmittelbar durch Induktion erwärmt. Hierzu werden Induktionsschleifen auf der Außenseite des Behälters angeordnet und die elektromagnetische Energie wird direkt in die Behälterwand eingebracht. Besondere Maßnahmen zur Aufnahme der elektromagnetischen Energie können dadurch entfallen. Es ergibt sich eine besonders einfach zu realisierende Apparatur.

Vorzugsweise sollte die Frequenz des induzierenden elektromagnetischen Felds so gewählt werden, dass die Eindringtiefe höchstens 1/3, vorzugsweise höchstens 1/4 der Behälterwanddicke beträgt. (Die "Eindringtiefe" bezeichnet dasjenige Maß bei der die Stromdichte auf 1/e ihres Maximalwerts abgefallen ist.)

Für eine Behälterwand aus einem nicht-magnetischen Edelstahl der Dicke von etwa 6 mm, wie sie beispielsweise im Bereich der Gewinnung von Krypton und Xenon üblich ist, wird bei einer Temperatur von ca. -135°C mit einer Frequenz von 40 kHz eine Eindringtiefe von etwa 1,5 mm erreicht. Für die Erzeugung der entsprechenden Frequenz wird ein handelsüblicher Frequenzumrichter eingesetzt.

Eine zweite Ausführungsform weist gegenüber der ersten zusätzlich einen Heizkörper auf, der auf der Außenseite der Behälterwand angeordnet ist. Der Heizkörper wird unmittelbar durch Induktion erwärmt. Die induktiv erzeugte Wärme wird durch Konduktion an die Wand des Behälters abgegeben.

Der Heizkörper wird aus einem anderen Material als die Behälterwand gefertigt, insbesondere aus einem magnetischen Werkstoff, vorzugsweise aus einem ferromagnetischen, elektrisch leitenden Werkstoff, zum Beispiel aus Eisen, Nickel, Kobalt oder einer ferromagnetischen Legierung mit mindestens einem der vorgenannten Elemente (zum Beispiel aus einem ferritischen Stahl). Damit kann mit einer konventionellen elektromagnetischen Netzfrequenz im Bereich von 20 bis 120 Hz gearbeitet werden.

Durch ein geeignetes Fügeverfahren wird der Heizkörper auf der Außenseite der Behälterwand befestigt, beispielsweise durch Kaltwalzen, Warmwalzen, Sprengschweißen oder konventionelles Schweißen. Er kann durch ein einzelnes Blech oder durch mehrere Blechstreifen gebildet werden.

Die Anordnung auf der Außenseite erfordert einen relativ geringen Fertigungsaufwand; außerdem ist man bei der Wahl des Materials relativ frei, da es nicht in direkten Kontakt mit der Sumpfflüssigkeit der Trennsäule tritt.

In einer dritten Ausführungsform der Erfindung ist der Heizkörper auf der Innenseite der Wand des Sumpfverdampfers angeordnet, und der Heizkörper wird unmittelbar durch Induktion erwärmt. Der Heizkörper ist damit auf seiner Innenseite in direktem Kontakt mit der zu erwärmenden Sumpfflüssigkeit. Somit wird die Wärmeübertragung effizienter; allerdings muss der Werkstoff des Heizkörpers resistent gegen die Sumpfflüssigkeit oder mit einer entsprechenden Beschichtung geschützt sein.

Ansonsten entspricht diese Ausführungsform hinsichtlich der Ausgestaltung des Heizkörpers und seiner Verbindung mit der Behälterwand der zweiten Ausführungsform.

Gemäß einer vierten Ausführungsform der Erfindung ist ein Heizkörper im Inneren des Behälters des Sumpfverdampfers mit Abstand zur Wand des Sumpfverdampfers angeordnet; dieser Heizkörper wird unmittelbar durch Induktion erwärmt.

Der Heizkörper wird dadurch auf beiden Seiten von der zu beheizenden Sumpfflüssigkeit umspült, sodass die Wärmeübertragung weiter verbessert wird. Er kann beispielsweise die Form eines Hohlzylinders aufweisen, dessen Durchmesser geringer als der Innendurchmesser des Behälters des Sumpfverdampfers ist. Alternativ kann er auch als spiralgewickeltes Blech ausgestaltet sein. Hinsichtlich des Werkstoffs des Heizkörpers gilt dasselbe wie bei der zweiten Ausführungsform. Zusätzlich ist hier auch der Einsatz eines para- oder diamagnetischen Werkstoffs möglich. In diesem Fall ist eine Anpassung der Erregerfrequenz auf die in der ersten Ausführungsvariante beschriebenen Werte notwendig.

In einer besonders bevorzugten Anwendung des erfindungsgemäßen Verfahrens bei der Krypton- und Xenongewinnung aus Luft wird als Fluidgemisch ein krypton- und xenonangereichertes Gemisch von Luftgasen eingesetzt. Dabei wird entweder die Krypton- und Xenon-Konzentration in der Trennsäule (Krypton-Xenon-Anreicherungssäule) erhöht, indem Sauerstoff aus dem Fluidgemisch abgetrennt wird, oder die Trennsäule stellt eine Krypton-Xenon-Säule dar, in der Krypton und Xenon voneinander getrennt werden. Des Weiteren ist auch ein Einsatz in Trennsäulen zur Abtrennung von Spurenverunreinigungen aus hochreinen und Reinstgasen möglich, sowie bei der destillativen Gewinnung oder Reinigung von Wasserstoff und Helium. Die Erfindung betrifft außerdem eine Vorrichtung gemäß Patentanspruch 7. Die erfindungsgemäße Vorrichtung kann durch Vorrichtungsmerkmale ergänzt werden, die den Merkmalen der abhängigen Verfahrensansprüche entsprechen.

Ist der Sumpfverdampfer in der Trennsäule eingebaut, so werden die "Mittel zum Einleiten von im Sumpfverdampfer erzeugtem Dampf in einen unteren Abschnitt der Trennsäule" durch den Behälterabschnitt zwischen dem untersten Stoffaustauschabschnitt der Trennsäule und dem Sumpfverdampfer gebildet, durch die der Dampf aus dem Sumpfverdampfer in den unteren Abschnitt der Trennsäule einströmt.

Die Erfindung sowie weitere Einzelheiten der Erfindung werden im Folgenden anhand von in den Zeichnungen dargestellten Ausführungsbeispielen näher erläutert. Hierbei zeigen:
- Figur 1: ein Beispiel für die ersten Ausführungsform der Erfindung,
- Figur 2: ein Beispiel für die zweite Ausführungsform der Erfindung,
- Figur 3: ein Beispiel für die dritte Ausführungsform der Erfindung und
- Figur 4: ein Beispiel für die vierte Ausführungsform der Erfindung.

In allen Beispielen ist lediglich der untere Teil der Trennsäule dargestellt, der gleichzeitig den Sumpfverdampfer bildet. Der Sumpfverdampfer ist also in die Trennsäule eingebaut. Der Behälter des Sumpfverdampfers ist identisch mit dem unteren Teil der Außenwand der Trennsäule. (Alternativ könnte der Sumpfverdampfer in einem separaten Behälter untergebracht sein; die in den Zeichnungen dargestellten Ausführungen der Induktionsheizung können dort ebenso angewendet werden.)

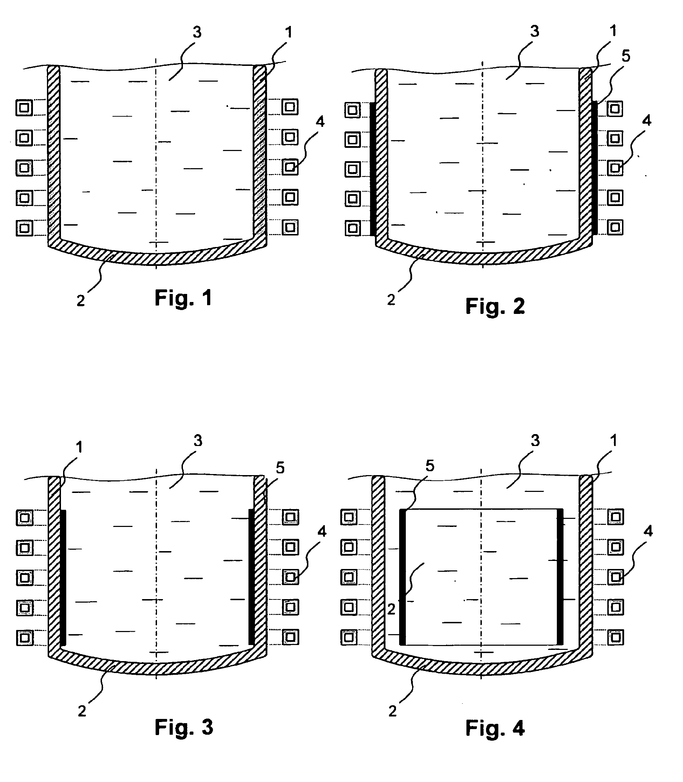

In Figur 1 weist der Behälter des Sumpfverdampfers eine zylinderförmige Außenwand 1 und einen gewölbten Boden 2 auf. In seinem Inneren steht Sumpfflüssigkeit 3 aus der Trennsäule an. Außerhalb der Außenwand 1 sind die Windungen 4 einer oder mehrerer Spulen angeordnet, die rund um die Außenwand führen und mit einem Wechselstrom von 40 kHz beaufschlagt werden. Durch Induktion wird der innerhalb der Windungen 4 gelegene Abschnitt der Außenwand 1 unmittelbar erwärmt. Über die Innenseite des Behälters wird die Wärme an die Sumpfflüssigkeit 3 abgegeben, die dabei teilweise verdampft. Die dabei gebildeten Dampfblasen (nicht dargestellt) steigen an die Oberfläche der Sumpfflüssigkeit auf und bilden dort die in der Trennsäule aufsteigende Dampfphase.

Die Spule(n) kann/können an der Außenwand befestigt werden oder (wie eine Induktionskochplatte) auch unterhalb des Bodens, auf dem auch die Trennsäule steht.

Das Ausführungsbeispiel der Figur 2 weist zusätzlich einen zylinderförmigen Heizkörper 5 beispielsweise aus Nickel auf, der auf die Außenseite der Außenwand 1 des Behälters aufgebracht ist und mit diesem vollflächig in mechanischem Kontakt steht. Die Windungen 5 und die Wechselstromfrequenz (in dem Beispiel 50 Hz) sind so ausgebildet, dass der Heizkörper die Energie des elektromagnetischen Feldes durch Induktion aufnimmt. Die dabei aufgenommene Wärme wird durch Konduktion in die Außenwand 1 des Behälters übertragen.

Im Ausführungsbeispiel der Figur 3 ist der Heizkörper 5 stattdessen auf der Innenseite der Außenwand 1 des Behälters angeordnet.

Figur 4 zeigt einen Heizkörper 5, der wie in Figur 2 und 3 als Hohlzylinder ausgebildet, aber abweichend davon im Inneren des Behälters mit Abstand zur Außenwand 1 angeordnet ist.

Abweichend von den Ausführungen in Figuren 3 und 4 kann die Wärmeabgabefläche des Heizkörpers 5 durch unterschiedliche Maßnahmen erhöht werden. Zum Beispiel können mehrere konzentrische Zylinder mit unterschiedlichem Durchmesser kombiniert werden. Alternativ kann das Blech des Heizkörpers spiralförmig um die Kolonnenachse gewickelt sein. Zusätzlich oder alternativ kann bei den Ausführungsformen der Figuren 3 und 4 die Oberfläche des Heizkörpers mit Rippen versehen oder der Heizkörper von Löchern durchbrochen sein ; bei den Ausführungsformen der Figuren 1 und 2 kann die Innenseite der Behälterwand mit Rippen versehen sein.

## Patentansprüche

1. Verfahren zur Tieftemperatur-Zerlegung eines Fluidgemischs, bei dem das Fluidgemisch in eine Trennsäule eingeleitet wird, mindestens ein Teil der Sumpfflüssigkeit der Trennsäule in einen Sumpfverdampfer eingeleitet und dort mindestens teilweise verdampft wird, mindestens ein Teil des in dem Sumpfverdampfer erzeugten Dampfs in einen unteren Abschnitt der Trennsäule zurückgeleitet wird, am Kopf der Trennsäule ein Kopfprodukt und am Sumpf der Trennsäule oder aus dem Sumpfverdampfer ein Sumpfprodukt entnommen wird, **dadurch gekennzeichnet, dass** der Sumpfverdampfer durch induktive Erwärmung betrieben wird.

2. Verfahren nach Anspruch 1, **dadurch gekennzeichnet, dass** eine Wand des Behälters des Sumpfverdampfers unmittelbar durch Induktion erwärmt wird.

3. Verfahren nach Anspruch 1, **dadurch gekennzeichnet, dass** auf der Außenseite der Wand des Sumpfverdampfers ein Heizkörper angeordnet ist, der Heizkörper unmittelbar durch Induktion erwärmt wird und die induktiv erzeugte Wärme durch Konduktion an die Wand des Behälters abgegeben wird.

4. Verfahren nach Anspruch 1, **dadurch gekennzeichnet, dass** auf der Innenseite der Wand des Sumpfverdampfers ein Heizkörper angeordnet ist und der Heizkörper unmittelbar durch Induktion erwärmt wird.

5. Verfahren nach Anspruch 1, **gekennzeichnet durch** einen Heizkörper, der im Inneren des Behälters des Sumpfverdampfers mit Abstand zur Wand des Sumpfverdampfers angeordnet ist, wobei der Heizkörper unmittelbar **durch** Induktion erwärmt wird.

6. Verfahren nach einem der Ansprüche 1 bis 5, **dadurch gekennzeichnet, dass** als Fluidgemisch ein krypton- und xenonangereichertes Gemisch von Luftgasen eingesetzt wird.

7. Vorrichtung zur Tieftemperatur-Zerlegung eines Fluidgemischs, mit einer Trennsäule und einem Sumpfverdampfer zum Verdampfen von Sumpfflüssigkeit der Trennsäule, mit Mitteln zum Einleiten das Fluidgemischs in die Trennsäule, mit Mitteln zum Einleiten von im Sumpfverdampfer erzeugtem Dampf in einen unteren Abschnitt der Trennsäule, mit Mitteln zum Abziehen eines Kopfprodukts am Kopf der Trennsäule und mit Mitteln zum Entnehmen eines Sumpfprodukts am Sumpf der Trennsäule oder aus dem Sumpfverdampfer, **dadurch gekennzeichnet, dass** der Sumpfverdampfer eine Induktionsheizung aufweist.

## Claims

1. Method for the low-temperature fractionation of a fluid mixture in which the fluid mixture is introduced into a separation column, at least part of the bottom liquid of the separation column is introduced into a bottom evaporator and at least partially evaporated there, at least part of the vapor generated in the bottom evaporator is returned into a lower portion of the separation column, a top product is removed at the top of the separation column and a bottom product is removed at the bottom of the separation column or from the bottom evaporator, **characterized in that** the bottom evaporator is operated by inductive heating.

2. Method according to Claim 1, **characterized in that** a wall of the vessel of the bottom evaporator is heated directly by induction.

3. Method according to Claim 1, **characterized in that** a heating body is arranged on the outer side of the wall of the bottom evaporator, the heating body is heated directly by induction and the inductively generated heat is given off to the wall of the vessel by conduction.

4. Method according to Claim 1, **characterized in that** a heating body is arranged on the inner side of the wall of the bottom evaporator and the heating body is heated directly by induction.

5. Method according to Claim 1, **characterized by** a heating body which is arranged inside the vessel of the bottom evaporator, at a distance from the wall of the bottom evaporator, the heating body being heated directly by induction.

6. Method according to one of Claims 1 to 5, **characterized in that** a mixture of air gases enriched with krypton and xenon is used as the fluid mixture.

7. Apparatus for the low-temperature fractionation of a fluid mixture, comprising a separation column and a bottom evaporator for evaporating bottom liquid of the separation column, comprising means for introducing the fluid mixture into the separation column, comprising means for introducing vapor generated in the bottom evaporator into a lower portion of the separation column, comprising means for drawing off a top product at the top of the separation column and comprising means for removing a bottom product at the bottom of the separation column or from the bottom evaporator, **characterized in that** the bottom evaporator has an induction heating unit.

## Revendications

1. Procédé pour la séparation cryogénique d'un mélange de fluides, dans lequel on introduit le mélange de fluides dans une colonne de séparation, on introduit au moins une partie du liquide de fond de la colonne de séparation dans un évaporateur de fond et on l'y vaporise au moins en partie, on renvoie au moins une partie de la vapeur produite dans l'évaporateur de fond dans une section inférieure de la colonne de séparation, on prélève un produit de tête à la tête de la colonne de séparation et un produit de fond au fond de la colonne de séparation ou hors de l'évaporateur de fond, **caractérisé en ce que** l'on fait fonctionner l'évaporateur de fond par chauffage inductif.

2. Procédé selon la revendication 1, **caractérisé en ce que** l'on chauffe une paroi du récipient de l'évaporateur de fond directement par induction.

3. Procédé selon la revendication 1, **caractérisé en ce qu'**un corps chauffant est disposé sur le côté extérieur de la paroi de l'évaporateur de fond, le corps chauffant est chauffé directement par induction et la chaleur produite par induction est cédée par conduction à la paroi du récipient.

4. Procédé selon la revendication 1, **caractérisé en ce qu'**un corps chauffant est disposé sur le côté intérieur de la paroi de l'évaporateur de fond et le corps chauffant est chauffé directement par induction.

5. Procédé selon la revendication 1, **caractérisé par** un corps chauffant, qui est disposé à l'intérieur du récipient de l'évaporateur de fond à distance de la paroi de l'évaporateur de fond, dans lequel le corps chauffant est chauffé directement par induction.

6. Procédé selon l'une quelconque des revendications 1 à 5, **caractérisé en ce que** l'on utilise comme mélange de fluides un mélange de gaz de l'air enrichi en krypton et en xénon.

7. Dispositif pour la séparation cryogénique d'un mélange de fluides, avec une colonne de séparation et un évaporateur de fond pour vaporiser du liquide de fond de la colonne de séparation, avec des moyens pour introduire le mélange de fluides dans la colonne de séparation, avec des moyens pour introduire de la vapeur produite dans l'évaporateur de fond dans une section inférieure de la colonne de séparation, avec des moyens pour soutirer un produit de tête à la tête de la colonne de séparation et avec des moyens pour prélever un produit de fond au fond de la colonne de séparation ou hors de l'évaporateur de fond, **caractérisé en ce que** l'évaporateur de fond présente un chauffage par induction.
